# EUROPEAN PATENT APPLICATION

(11) **EP 4 852 576 A1**
(43) Date of publication of application: **09.12.2026**
(21) Application number: 25767426.7
(22) Date of filing: 06.03.2025
(51) Int. Cl.: H04W 72/20

(54) **TRANSMISSION METHOD, DEVICE, AND STORAGE MEDIUM**

(30) Priority: 06.03.2024 CN 202410256516
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: HU, Lijie, Beijing 100032 (CN); SHEN, Xiaodong, Beijing 100032 (CN); HUANG, Yuhong, Beijing 100032 (CN); XU, Xiaodong, Beijing 100032 (CN)
(74) Representative: Patentgruppen A/S
(86) International application number: PCT/CN2025/080956
(87) International publication number: WO 2025/185686

(57) **Abstract**

Embodiments of the present disclosure provide various transmission methods, devices, and storage media. The method includes: receiving first indication information sent by a second device, wherein the first indication information is used to indicate at least one parameter set, each parameter set includes at least one parameter, the at least one parameter is one or more resource(s) related parameters or one or more transmission scheme(s) related parameters, and a quantity of parameters in at least one parameter set is greater than 1; and determining one or more target parameters from the at least one parameter set, and sending first information using the one or more target parameters.

## Description

### CROSS-REFERENCE TO RELATED APPLICATION

This application claims a priority of the Chinese patent application No. 202410256516.6 filed on March 06, 2024, which is incorporated herein by reference in its entirety.

### TECHNICAL FIELD

The present disclosure relates to the technical fields of wireless communication and Passive Internet of Things (IoTs), and specifically relates to various transmission methods, devices, and storage media.

### BACKGROUND

Radio Frequency Identification (RFID) systems typically include a reader (or an interrogator, also referred to as a Reader) and many transponders (or tags, also referred to as tags). The transponder (tag/Tag) is composed of a coupling element and a chip, and each tag has a unique Electronic Product Code (EPC). In an RFID system, the transmission from the reader to the tags can be analogously viewed as the transmission from a base station or a coordination node (a relay, a user equipment (UE), etc.) to a device, which is referred to as downlink transmission for convenience of description. The transmission from the tags to the reader can be viewed as the transmission in the direction from the device to the base station or the coordination node (the relay, the UE, etc.), which is referred to as uplink transmission for convenience of description.

In an inventory procedure of a Radio Frequency Identification (RFID) system, when multiple tags receive the same QueryRep or Query command, if values of their slot counters are all 0, they will simultaneously respond to the above command by feeding back a pseudo-random sequence (RN16). When multiple tags send uplink information (such as RN16) at the same time, uplink transmission collision will be caused, and it is difficult for the reader to correctly receive the uplink information sent by the tags. Considering that cellular passive Internet of Things is oriented towards 100 billion connections, the quantity of terminals in the future may be even larger than the current scale of RFID. If information reporting in the case of uplink transmission collision cannot be supported, the cycle of one round of inventory will be greatly increased. Therefore, there is an urgent need for a method capable of reducing the probability of occurrence of uplink transmission collision and improving information transmission efficiency.

### SUMMARY

At least one embodiment of the present disclosure provides various transmission methods, terminals, network devices, and storage media, which can reduce a probability of occurrence of uplink transmission collision and improve information transmission efficiency.

In order to solve the above technical problem, the present disclosure is implemented as follows.

In a first aspect, an embodiment of the present disclosure provides a transmission method, applied to a first device, including:
receiving first indication information sent by a second device, wherein the first indication information is used to indicate at least one parameter set, each parameter set includes at least one parameter, the at least one parameter is one or more resource(s) related parameters or one or more transmission scheme(s) related parameters, and a quantity of parameters in at least one parameter set is greater than 1; and
determining one or more target parameters from the at least one parameter set, and sending first information using the one or more target parameters.

Optionally, in a case where the first indication information only indicates a first parameter set, the determining the one or more target parameters from the at least one parameter set includes:
determining the one or more target parameters according to a target method, wherein the target method includes at least one of the following:
a first method: determining the one or more target parameters from the first parameter set based on identifier-related information of the first device;
a second method: determining the one or more target parameters from the first parameter set based on target data generated by the first device;
a third method: randomly selecting one or more parameters from the first parameter set as the one or more target parameters; or,
a fourth method: taking one or more parameters in the first parameter set that corresponds to a type of the first device, a channel state range of the first device, or a downlink signal reception quality range of the first device as the one or more target parameters.

Optionally, in a case where the first indication information indicates at least two parameter sets, the determining the one or more target parameters from the at least one parameter set includes:
determining, from at least two transmission sets, a target transmission set used for transmitting the first information, wherein the transmission set is a set of transmission occasions or a set of slots;
determining, from the at least two parameter sets, a target parameter set corresponding to the target transmission set according to a first correspondence relationship between the at least two parameter sets and the at least two transmission sets; and
determining one target parameter from the target parameter set.

Optionally, the determining, from the at least two transmission sets, the target transmission set used for transmitting the first information includes at least one of the following:
taking a transmission set among the at least two transmission sets that corresponds to the type of the first device as the target transmission set;
taking a transmission set among the at least two transmission sets that corresponds to a priority of the first device as the target transmission set;
taking a transmission set among the at least two transmission sets that corresponds to the channel state range of the first device as the target transmission set; or,
taking a transmission set among the at least two transmission sets that corresponds to the downlink signal reception quality range of the first device as the target transmission set.

Optionally, the method further includes:
obtaining the first correspondence relationship between the at least two parameter sets and the at least two transmission sets, wherein the first correspondence relationship is obtained from the first indication information or from second indication information sent by the second device.

Optionally, the determining the one target parameter from the target parameter set includes:
determining the one or more target parameters according to a target method, wherein the target method includes at least one of the following:
a first method: determining the one or more target parameters from the target parameter set based on identifier-related information of the first device;
a second method: determining the one or more target parameters from the target parameter set based on target data generated by the first device;
a third method: randomly selecting one or more parameters from the target parameter set as the one or more target parameters; or,
a fourth method: taking one or more parameters in the target parameter set that corresponds to the type of the first device, the channel state range of the first device, or the downlink signal reception quality range of the first device as the one or more target parameters.

Optionally, in the first method, a first value is determined based on the identifier-related information of the first device, and one or more parameters corresponding to the first value are taken as the one or more target parameters, wherein a second correspondence relationship exists between the first value and one or more parameters in the parameter set;
in the second method, a second value is determined based on the target data generated by the first device, and one or more parameters corresponding to the second value are taken as the one or more target parameters, wherein a third correspondence relationship exists between the second value and the one or more parameters in the parameter set; and
in the fourth method, a fourth correspondence relationship exists between the type of the first device, the channel state range of the first device, or the downlink signal reception quality range of the first device and the one or more parameters in the parameter set.

Optionally, the method further includes:
receiving at least one threshold value sent by the second device, wherein the at least one threshold value is used to determine the channel state range or the downlink signal reception quality range.

Optionally, the method further includes:
receiving third indication information sent by the second device, wherein the third indication information is used for determining the target method.

Optionally, at least one of the first indication information, the second indication information, or the third indication information is carried in second information sent by the second device; or,
at least one of the first indication information, the second indication information, or the third indication information is sent by the second device before sending the second information.

Optionally, the method further includes:
receiving third information sent by the second device based on the one or more target parameters, wherein the third information corresponds to the first information; and
sending fourth information based on the one or more target parameters.

Optionally, the one or more resource(s) related parameters include at least one of the following: one or more time-domain resources related parameters, one or more frequency-domain resources related parameters, or one or more code-domain resources related parameters.

Optionally, the one or more transmission scheme(s) related parameters include one or more modulation schemes related parameters and/or one or more coding schemes related parameters.

In a second aspect, an embodiment of the present disclosure provides a transmission method, applied to a second device, including:
sending first indication information, wherein the first indication information is used to indicate at least one parameter set, each parameter set includes at least one parameter, the at least one parameter is one or more resource(s) related parameters or one or more transmission scheme(s) related parameters, and a quantity of parameters in at least one parameter set is greater than 1; and
receiving first information sent by a first device using one or more target parameters, wherein the one or more target parameters is one parameter in the at least one parameter set.

Optionally, in a case where the first indication information only indicates a first parameter set, a quantity of parameters in the first parameter set is greater than 1.

Optionally, in a case where the first indication information indicates at least two parameter sets, the method further includes:
sending a first correspondence relationship between the at least two parameter sets and at least two transmission sets, wherein the first correspondence relationship is carried in the first indication information or in second indication information sent by the second device, and the transmission set is a set of transmission occasions or a set of slots.

Optionally, the transmission set corresponds to a type of the first device; or,
the transmission set corresponds to a priority of the first device; or,
the transmission set corresponds to a channel state range of the first device; or,
the transmission set corresponds to a downlink signal reception quality range of the first device.

Optionally, the method further includes:
sending at least one threshold value, wherein the at least one threshold value is used to determine the channel state range or the downlink signal reception quality range.

Optionally, the method further includes:
sending third indication information, wherein the third indication information is used to indicate a target method for determining the one or more target parameters from the parameter set, the target method including at least one of the following:
a first method: determining the one or more target parameters from the parameter set based on identifier-related information of the first device;
a second method: determining the one or more target parameters from the parameter set based on target data generated by the first device;
a third method: randomly selecting one or more parameters from the parameter set as the one or more target parameters; or,
a fourth method: taking one or more parameters in the parameter set that corresponds to the type of the first device, the channel state range of the first device, or the downlink signal reception quality range of the first device as the one or more target parameters.

Optionally, at least one of the first indication information, the second indication information, or the third indication information is carried in second information sent by the second device; or,
at least one of the first indication information, the second indication information, or the third indication information is sent before the second information.

Optionally, in a case where the first information sent by the first device using the one or more target parameters is received, the method further includes:
sending third information to the first device using the one or more target parameters, wherein the third information corresponds to the first information; and
receiving fourth information sent by the first device using the one or more target parameters.

Optionally, the one or more resource(s) related parameters include at least one of the following: one or more time-domain resources related parameters, one or more frequency-domain resources related parameters, or one or more code-domain resources related parameters.

Optionally, different frequency-domain resources within the one or more frequency-domain resources are realized by different modulation schemes and/or coding schemes.

In a third aspect, an embodiment of the present disclosure provides a first device, including:
a first receiving module, configured to receive first indication information sent by a second device, wherein the first indication information is used to indicate at least one parameter set, each parameter set includes at least one parameter, the at least one parameter is one or more resource(s) related parameters or one or more transmission scheme(s) related parameters, and a quantity of parameters in at least one parameter set is greater than 1; and
a first sending module, configured to determine one or more target parameters from the at least one parameter set, and send first information using the one or more target parameters.

In a fourth aspect, an embodiment of the present disclosure provides a second device, including:
a first sending module, configured to send first indication information, wherein the first indication information is used to indicate at least one parameter set, each parameter set includes at least one parameter, the at least one parameter is one or more resource(s) related parameters or one or more transmission scheme(s) related parameters, and a quantity of parameters in at least one parameter set is greater than 1; and
a first receiving module, configured to receive first information sent by a first device using one or more target parameters, wherein the one or more target parameters is one parameter in the at least one parameter set.

In a fifth aspect, an embodiment of the present disclosure provides a terminal, including: a processor, a memory, and a program stored on the memory and executable on the processor, wherein when the program is executed by the processor, the steps of the method according to the first aspect are implemented.

In a sixth aspect, an embodiment of the present disclosure provides a network device, including: a processor, a memory, and a program stored on the memory and executable on the processor, wherein when the program is executed by the processor, the steps of the method according to the second aspect are implemented.

In a seventh aspect, an embodiment of the present disclosure provides a computer-readable storage medium, wherein a program is stored on the computer-readable storage medium, and when the program is executed by a processor, the steps of the method according to the first aspect or the second aspect are implemented.

In an eighth aspect, an embodiment of the present disclosure provides a computer program product, including computer instructions, wherein when the computer instructions are executed by a processor, the steps of the method according to the first aspect or the second aspect are implemented.

Compared with the related art, in the transmission methods, the devices, and the storage media provided by the embodiments of the present disclosure, the second device indicates multiple parameters to the first device, and the first device may select one or more target parameters therefrom to send the first information. Therefore, in a case where multiple first devices select different target parameters to send uplink information, the probability of occurrence of uplink transmission collision can be reduced, and information transmission efficiency can be improved.

### BRIEF DESCRIPTION OF THE DRAWINGS

Various other advantages and benefits will become clear to those of ordinary skill in the art by reading the following detailed description of preferred embodiments. The drawings are only for the purpose of illustrating the preferred embodiments and are not to be construed as a limitation to the present disclosure. Moreover, throughout the drawings, the same reference symbols denote the same components. In the drawings:
FIG. 1 is a schematic diagram of Miller modulation;
FIG. 2 is a flowchart of a transmission method according to an embodiment of the present disclosure when applied to a first device side;
FIG. 3 is a flowchart of a transmission method according to an embodiment of the present disclosure when applied to a second device side;
FIG. 4 is an exemplary diagram of spectrum for Miller modulation based on M=2 and M=4;
FIG. 5 is an exemplary diagram of demodulation performance comparison between multiplexing and non-multiplexing using different M values;
FIG. 6 is a schematic structural diagram of a first device according to an embodiment of the present disclosure;
FIG. 7 is a schematic structural diagram of a second device according to an embodiment of the present disclosure;
FIG. 8 is a schematic structural diagram of a first device according to another embodiment of the present disclosure; and
FIG. 9 is a schematic structural diagram of a second device according to another embodiment of the present disclosure.

### DETAILED DESCRIPTION

Exemplary embodiments of the present disclosure will be described in more detail below with reference to the accompanying drawings. While exemplary embodiments of the present disclosure are shown in the drawings, it should be understood that the present disclosure can be implemented in various forms and should not be limited by the embodiments set forth herein. Rather, these embodiments are provided so that the present disclosure can be thoroughly understood and the scope of the present disclosure can be fully conveyed to those skilled in the art.

The terms "first", "second", and the like in the specification and claims of the present disclosure are used to distinguish similar objects and are not necessarily used to describe a specific sequence or chronological order. It should be understood that data used in this way can be interchanged under appropriate circumstances so that the embodiments of the present disclosure described herein can be implemented in orders other than those illustrated or described herein. In addition, the terms "comprise", "have", and any variations thereof are intended to cover non-exclusive inclusion. For example, a process, method, system, product, or device including a series of steps or units is not necessarily limited to those steps or units clearly listed, but may include other steps or units not clearly listed or inherent to such processes, methods, products, or devices. "And/or" in the specification and claims represents at least one of the connected objects.

The technology described herein is not limited to New Radio (NR) systems and Long Term Evolution (LTE)/LTE-Advanced (LTE-A) systems, and can also be used in various wireless communication systems such as Code Division Multiple Access (CDMA), Time Division Multiple Access (TDMA), Frequency Division Multiple Access (FDMA), Orthogonal Frequency Division Multiple Access (OFDMA), Single-carrier Frequency-Division Multiple Access (SC-FDMA), and other systems. The terms "system" and "network" are often used interchangeably. A CDMA system may implement radio technologies such as CDMA2000, Universal Terrestrial Radio Access (UTRA), etc. UTRA includes Wideband Code Division Multiple Access (WCDMA) and other CDMA variants. A TDMA system may implement radio technologies such as Global System for Mobile Communication (GSM). An OFDMA system may implement radio technologies such as Ultra Mobile Broadband (UMB), Evolution-UTRA (E-UTRA), Institute of Electrical and Electronics Engineers (IEEE) 802.11 (Wireless Fidelity (Wi-Fi)), IEEE 802.16 (World Interoperability for Microwave Access (WiMAX)), IEEE 802.20, Fast Low-latency Access with Seamless Handoff-Orthogonal Frequency Division Multiplexing (Flash-OFDM), etc. UTRA and E-UTRA are parts of Universal Mobile Telecommunications System (UMTS). LTE and more advanced LTE (such as LTE-A) are new UMTS versions using E-UTRA. UTRA, E-UTRA, UMTS, LTE, LTE-A, and GSM are described in documents from an organization named "3rd Generation Partnership Project" (3GPP). CDMA2000 and UMB are described in documents from an organization named "3rd Generation Partnership Project 2" (3GPP2). The technologies described herein can be used for both the systems and radio technologies mentioned above and other systems and radio technologies. However, the following description describes an NR system for exemplary purposes, and NR terminology is used in most of the following description, although these technologies are also applicable to applications other than NR system applications.

The following description provides examples and does not limit the scope, applicability, or configuration set forth in the claims. Changes may be made to the function and arrangement of the elements discussed without departing from the scope of the present disclosure. Various examples may appropriately omit, substitute, or add various procedures or components. For example, the described methods may be performed in an order different from that described, and various steps may be added, omitted, or combined. In addition, features described with reference to certain examples may be combined in other examples.

In an inventory procedure in the RFID protocol of the related art, a tag receives a Query command sent by a reader and enters an inventory state. In the inventory state, after receiving the Query command, the tag performs matching based on a Sel field or a Session field indicated by the Query command in combination with a Target field. If the matching is consistent, a pseudo-random sequence of RN16 is generated according to the Query command, and a Q field therein is taken and loaded into a slot counter. When the sequence loaded in the slot counter is 0, the tag sends a response message; otherwise, the tag remains silent. The reader repeatedly sends QueryRep commands. Each time the tag receives a QueryRep command, it decrements a value of the slot counter by one. When it decrements to 0, the tag responds; otherwise, it continues to wait for the QueryRep command.

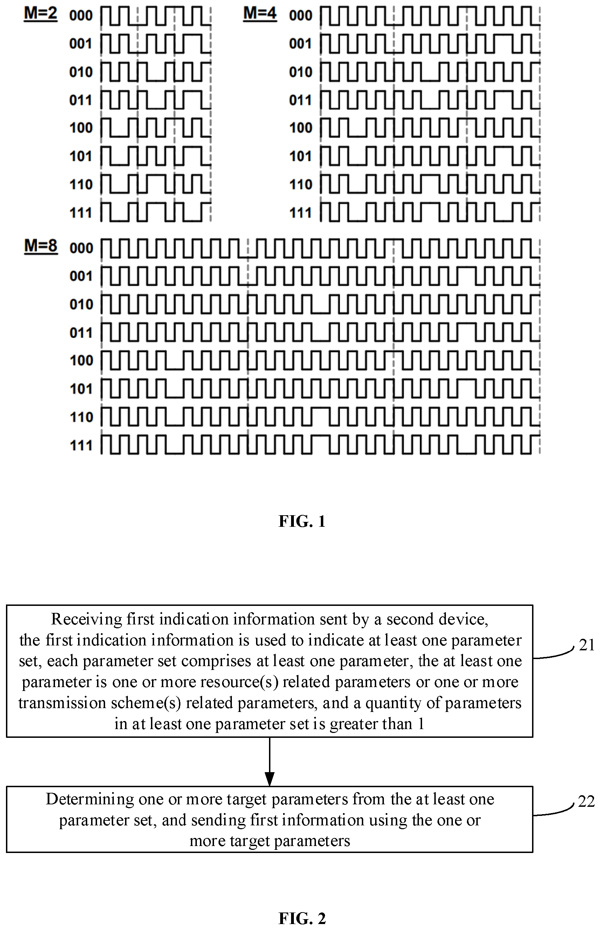

In order to implement multi-user simultaneous uplink transmission, the RFID system introduces multiplexing transmission technology. From the perspective of low-power-consumption design, a method based on On-Off Keying (OOK) modulation is usually used, and a receiving end obtains an amplitude value through envelope detection to demodulate various carried information. On this basis, if data of multiple users is simply superimposed together, it will be difficult for the receiving end to demodulate data of each user. In addition, in a transmission procedure from a tag to a reader in the RFID system, FM0 or Miller modulated subcarrier may be used. Parameters such as M=2, 4, 8 are used for the Miller modulated subcarrier. As shown in FIG. 1, for parameters such as M=2, 4, 8, each bit includes 2, 4, or 8 subcarrier cycles.

As described in the background section, when multiple tags receive a QueryRep command and the value of the slot counter is 0, they will simultaneously send response messages, for example, sending the pseudo-random sequence RN16. Since waveform transmission based on OOK is adopted, the reader performs detection based on amplitude. If multiple tags send response messages at the same time, different bits carried will lead to different amplitude values of received signals. Therefore, it is difficult for the reader to distinguish different users, resulting in response failure due to uplink transmission collision.

Embodiments of the present disclosure provide a transmission method, which can improve the transmission efficiency of uplink information in a case where uplink transmission collision occurs. For example, when the method of the embodiments of the present disclosure is applied to a tag inventory procedure, the success rate of the response messages of multiple terminals (tags) being identified by a network device can be improved when uplink transmission collision occurs, thereby improving inventory efficiency.

In this context, each slot usually refers to a time interval between related messages, i.e., all or part of the time between two messages is usually taken as one slot. Of course, the above-mentioned slot may also be identified by other names, and the embodiments of the present disclosure do not limit this. A duration of each slot may be the same or different.

Referring to FIG. 2, a transmission method provided by an embodiment of the present disclosure, when applied to a terminal side (first device side), includes:
Step 21: receiving first indication information sent by a second device, wherein the first indication information is used to indicate at least one parameter set, each parameter set includes at least one parameter, the at least one parameter is one or more resource(s) related parameters or one or more transmission scheme(s) related parameters, and a quantity of parameters in at least one parameter set is greater than 1.

Here, in the embodiments of the present disclosure, the first device may specifically be an active or passive device such as a tag, or a device provided with a tag (sometimes also referred to as a device). The second device may be a reader (sometimes also referred to as an interrogator) providing communication services for the first device, and specifically may be various base stations, relay devices, user equipments (UEs, such as mobile phones), etc.

The first indication information may indicate one or more parameter sets, wherein at least one parameter set has a quantity of parameters greater than 1. Specifically, the parameter is one or more resource(s) related parameters or one or more transmission scheme(s) related parameters, wherein the one or more resource(s) related parameters include at least one of the following: one or more time-domain resources related parameters, one or more frequency-domain resources related parameters, or one or more code-domain resources related parameters. The one or more transmission scheme(s) related parameters include one or more modulation schemes related parameters and/or one or more coding schemes related parameters.

The parameter set indicated here does not require an explicit definition of a set, but is intended to represent that multiple resources or multiple transmission schemes are indicated as candidates, or it may be a sequence of resources or transmission schemes. For convenience of description, it is referred to as a set.

For Miller subcarriers, the first indication information may be used to indicate a set of one or more modulation schemes related parameters, or to indicate a set of one or more coding schemes related parameters, or to indicate a set of one or more modulation schemes related parameters and one or more coding schemes related parameters. The set of one or more modulation schemes related parameters and the set of one or more coding schemes related parameters may be described as a modulation and coding set, which may be understood as a set of modulation and coding schemes. For example, the Miller code itself can be regarded as a coding scheme. When Miller modulated subcarriers are used with different values of M=2, 4, 8, the number of subcarrier cycles included in each bit is also different, which can also be regarded as different modulation schemes.

Step 22: determining one or more target parameters from the at least one parameter set, and sending first information using the one or more target parameters.

Here, the one or more target parameters is a parameter in a certain parameter set, such as one or more time-domain resources related parameters, one or more frequency-domain resources related parameters, one or more code-domain resources related parameters, or one or more modulation schemes related parameters and/or one or more coding schemes related parameters. The terminal sends the first information based on the one or more target parameters. Taking the inventory procedure of an RFID system as an example, sending the first information in step 22 may be the first device sending the pseudo-random sequence RN16.

Through the above steps, the second device indicates multiple parameters to the first device, so that the first device can select one or more target parameters therefrom to send the first information. The second device can demodulate the first information sent based on different target parameters, so that in a case where multiple first devices send uplink information at the same time, the probability of occurrence of uplink transmission collision can be reduced, and information transmission efficiency can be improved.

In the embodiments of the present disclosure, the first indication information may indicate one or more parameter sets, where "multiple" refers to two or more. The selection of the one or more target parameters for different cases is described below.

In a case where the first indication information only indicates one parameter set (for convenience of description, this parameter set is referred to as a first parameter set), in the above step 22, the first device may determine the one or more target parameters according to a certain method (referred to herein as a target method). Specifically, the target method includes at least one of the following methods, for example, is one of the following methods.

A first method: determining the one or more target parameters from the first parameter set based on identifier-related information of the first device.

Here, the identifier-related information of the first device may be an identifier of the first device or information related to the identifier. For example, a first value may be determined based on the identifier-related information of the first device, and one or more parameters in the first parameter set that corresponds to the first value are taken as the one or more target parameters, wherein a correspondence relationship exists between the first value and the one or more parameters in the parameter set. The correspondence relationship may be locally stored by the first device, or sent by the second device to the first device.

A second method: determining the one or more target parameters from the first parameter set based on target data generated by the first device.

Here, the target data is certain data generated by the first device, for example, a generated random number. For example, a second value may be determined based on the target data generated by the first device, and one or more parameters in the first parameter set that corresponds to the second value are taken as the one or more target parameters, wherein a correspondence relationship exists between the second value and the one or more parameters in the parameter set. Similarly, the correspondence relationship may be locally stored by the first device, or sent by the second device to the first device.

A third method: randomly selecting one or more parameters from the first parameter set as the one or more target parameters.

A fourth method: taking one or more parameters in the first parameter set that corresponds to a type of the first device, a channel state range of the first device, or a downlink signal reception quality range of the first device as the one or more target parameters.

Here, a correspondence relationship exists between the device type of the first device, the channel state range of the first device, or the downlink signal reception quality range of the first device and the parameters in the first parameter set. In this way, the one or more parameters in the first parameter set corresponding to the device type of the first device, the channel state range of the first device, or the downlink signal reception quality range of the first device can be taken as the one or more target parameters.

In a case where the first indication information indicates at least two parameter sets, in the above step 22, the first device may determine the one or more target parameters according to the following steps.

Step 221: determining, from at least two transmission sets, a target transmission set used for transmitting the first information, wherein the transmission set is a set of transmission occasions or a set of slots.

In an RFID system, a slot usually refers to a time interval between related messages, i.e., all or part of the time between two messages is usually taken as one slot. A duration of each slot may be the same or different. Specifically, the method for determining the target transmission set may include at least one of the following.
(1) taking a transmission set among the at least two transmission sets that corresponds to the type of the first device as the target transmission set.
(2) taking a transmission set among the at least two transmission sets that corresponds to a priority of the first device as the target transmission set.
(3) taking a transmission set among the at least two transmission sets that corresponds to the channel state range of the first device as the target transmission set.
(4) taking a transmission set among the at least two transmission sets that corresponds to the downlink signal reception quality range of the first device as the target transmission set.

Step 222: determining, from the at least two parameter sets, a target parameter set corresponding to the target transmission set according to a first correspondence relationship between the at least two parameter sets and the at least two transmission sets.

Here, the first device may pre-obtain the first correspondence relationship between the at least two parameter sets and the at least two transmission sets. Specifically, the first correspondence relationship may be obtained from the first indication information or from second indication information sent by the second device. Of course, the first correspondence relationship may also be pre-stored locally in the first device, such as in a memory. For example, the first correspondence relationship usually includes n number of parameter sets and m number of transmission sets, where both n and m are integers greater than or equal to 2. Here, n may be equal to m or not; for example, n may be less than m.

Step 223: determining one target parameter from the target parameter set.

Here, the first device may determine the one or more target parameters according to a target method, wherein the target method includes at least one of the following.

A first method: determining the one or more target parameters from the target parameter set based on identifier-related information of the first device.

For example, the identifier-related information of the first device may be an identifier of the first device or information related to the identifier. For example, a first value may be determined based on the identifier-related information of the first device, and one or more parameters in the target parameter set that corresponds to the first value are taken as the one or more target parameters, wherein a correspondence relationship exists between the first value and the one or more parameters in the parameter set. The correspondence relationship may be locally stored by the first device, or sent by the second device to the first device.

A second method: determining the one or more target parameters from the target parameter set based on target data generated by the first device.

For example, the target data is certain data generated by the first device, such as a generated random number. For example, a second value may be determined based on the target data generated by the first device, and one or more parameters in the target parameter set that corresponds to the second value are taken as the one or more target parameters, wherein a correspondence relationship exists between the second value and the one or more parameters in the parameter set. Similarly, the correspondence relationship may be locally stored by the first device, or sent by the second device to the first device.

A third method: randomly selecting one or more parameters from the target parameter set as the one or more target parameters.

A fourth method: taking one or more parameters in the target parameter set that corresponds to the type of the first device, the channel state range of the first device, or the downlink signal reception quality range of the first device as the one or more target parameters.

For example, a correspondence relationship exists between the device type of the first device, the channel state range of the first device, or the downlink signal reception quality range of the first device and the parameters in the first parameter set. In this way, the one or more parameters in the target parameter set corresponding to the device type of the first device, the channel state range of the first device, or the downlink signal reception quality range of the first device can be taken as the one or more target parameters.

In order to facilitate the first device in determining the channel state range or the downlink signal reception quality range, in the embodiments of the present disclosure, the first device may further receive at least one threshold value sent by the second device, wherein the at least one threshold value is used to determine the channel state range or the downlink signal reception quality range. Of course, the threshold value may also be pre-stored locally in the first device. The first device may measure a channel state or a downlink signal reception quality, and then compare the measured channel state or downlink signal reception quality with the threshold value to determine the channel state range to which the measured channel state belongs or the downlink signal reception quality range to which the downlink signal reception quality belongs.

In addition, in the embodiments of the present disclosure, the target method may be indicated by the second device for the first device to determine the one or more target parameters. In this case, the first device may further receive third indication information sent by the second device, wherein the third indication information is used for determining the target method.

At least one of the first indication information, the second indication information, or the third indication information mentioned above may be carried in second information sent by the second device; or, at least one of the first indication information, the second indication information, or the third indication information is sent by the second device before sending the second information. Taking the inventory procedure of an RFID system as an example, the second information may be a Query/QueryRep command, wherein the Query/QueryRep command is used to start an inventory procedure or to indicate a slot.

After the above step 22, the second device may send third information based on the one or more target parameters, wherein the third information corresponds to the first information. After successfully receiving the third information, the first device sends fourth information. Taking the inventory procedure of an RFID system as an example, the third information may be an Acknowledge (ACK) command, and the fourth information may be an Electronic Product Code (EPC) of the first device, a truncated EPC, or data.

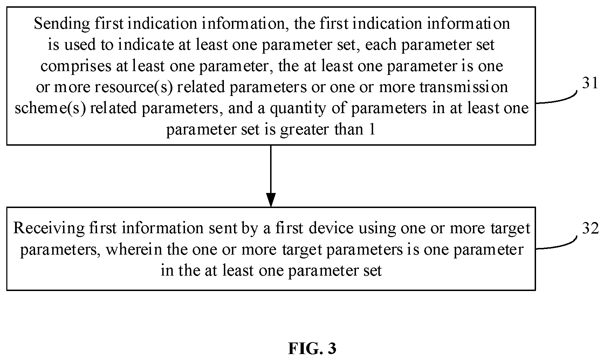

FIG. 3 is a flowchart of a transmission method according to an embodiment of the present disclosure when applied to a second device side. The second device may be a reader (sometimes also referred to as an interrogator) providing communication services for the first device, and specifically may be various base stations, relay devices, user equipments (UEs, such as mobile phones), etc. The first device may specifically be an active or passive device such as a tag, or a device provided with a tag (sometimes also referred to as a device). As shown in FIG. 3, the method includes the following steps:
Step 31: sending first indication information, wherein the first indication information is used to indicate at least one parameter set, each parameter set includes at least one parameter, the at least one parameter is one or more resource(s) related parameters or one or more transmission scheme(s) related parameters, and a quantity of parameters in at least one parameter set is greater than 1.
   Here, the first indication information may indicate one or more parameter sets, wherein at least one parameter set has a quantity of parameters greater than 1. Specifically, the parameter is one or more resource(s) related parameters or one or more transmission scheme(s) related parameters, wherein the one or more resource(s) related parameters include at least one of the following: one or more time-domain resources related parameters, one or more frequency-domain resources related parameters, or one or more code-domain resources related parameters. The one or more transmission scheme(s) related parameters include one or more modulation schemes related parameters and/or one or more coding schemes related parameters.
Step 32: receiving first information sent by a first device using one or more target parameters, wherein the one or more target parameters is one parameter in the at least one parameter set.

Here, the second device receives the first information sent by the first device based on a certain parameter in the at least one parameter set. Since the second device provides a variety of candidate parameters, different first devices may select different parameters for transmission when sending information simultaneously. This increases the possibility that the second device can determine the information sent by each first device based on different parameters, thereby improving information transmission efficiency.

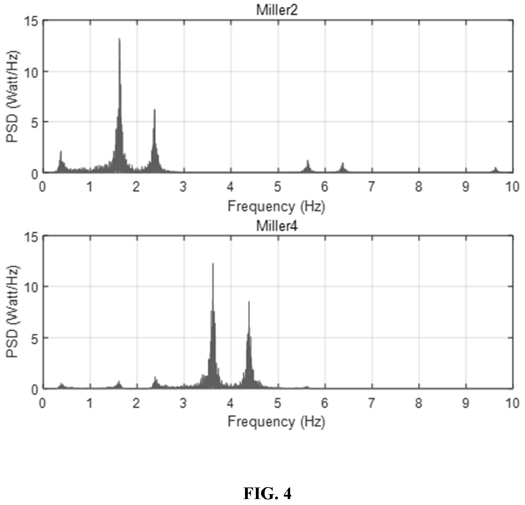

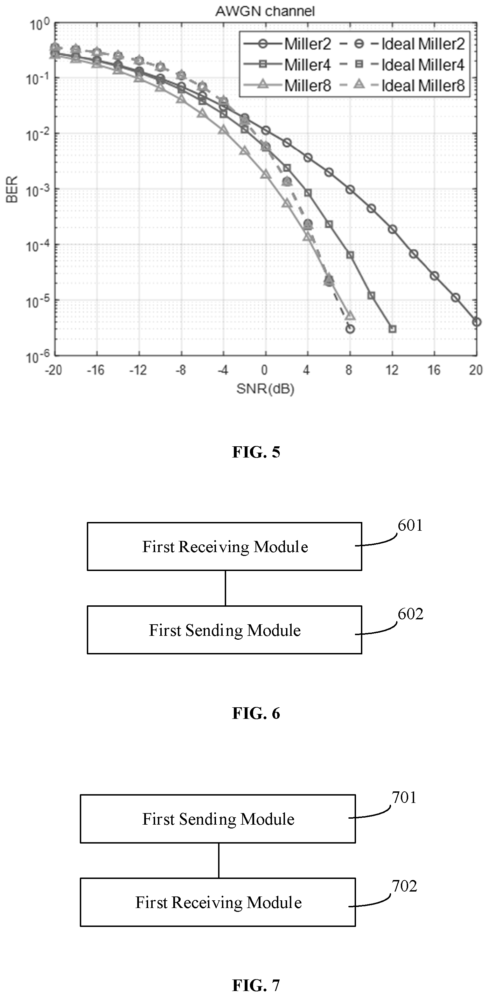

For example, FIG. 4 shows a schematic diagram of spectrum for Miller modulation based on M=2 and M=4. It can be observed that when Miller modulation uses M=2, the spectrum is concentrated at 1~3 Hz, and when M=4, the spectrum is concentrated at 3~5 Hz. Based on the above spectrum characteristics, in a case where data with M=2, M=4, and M=8 are transmitted simultaneously, filters are used at a receiving end to filter data of different M values and corresponding demodulation performance evaluation is performed, so that a comparison of demodulation performance between multiplexing and non-multiplexing using different M values as shown in FIG. 5 can be obtained. As can be seen from FIG. 5, if users with different M values are multiplexed together, demodulation can be successfully implemented at the receiving end. Moreover, the performance is better in a case of a low signal-to-noise ratio (SNR), which may be because part of the noise is also filtered out during filtering procedure. It can be seen that the above-mentioned method of the embodiments of the present disclosure can reduce the collision probability of uplink information, improve the successful reception rate of uplink information at the receiving end, and thus improve information transmission efficiency.

In the embodiments of the present disclosure, in a case where the first indication information sent in step 31 only indicates one parameter set, the quantity of parameters in the parameter set is greater than 1. In a case where the first indication information indicates at least two parameter sets, the second device may further send a first correspondence relationship between the at least two parameter sets and at least two transmission sets, wherein the first correspondence relationship is carried in the first indication information or in second indication information sent by the second device, and the transmission set is a set of transmission occasions or a set of slots.

Here, the transmission set may correspond to a type of the first device; or, the transmission set corresponds to a priority of the first device; or, the transmission set corresponds to a channel state range of the first device; or, the transmission set corresponds to a downlink signal reception quality range of the first device.

In addition, the second device may further send at least one threshold value, wherein the at least one threshold value is used to determine the channel state range or the downlink signal reception quality range, so as to facilitate the first device in determining its channel state range or downlink signal reception quality range.

The second device may further send third indication information, wherein the third indication information is used to indicate a target method for determining the one or more target parameters from the parameter set, the target method including at least one of the following.
A first method: determining the one or more target parameters from the parameter set based on identifier-related information of the first device;
A second method: determining the one or more target parameters from the parameter set based on target data generated by the first device;
A third method: randomly selecting one or more parameters from the parameter set as the one or more target parameters;
A fourth method: taking one or more parameters in the parameter set that corresponds to the type of the first device, the channel state range of the first device, or the downlink signal reception quality range of the first device as the one or more target parameters.

For a more specific description of the above methods, reference may be made to the previous description, and details are not repeated here.

Here, at least one of the first indication information, the second indication information, or the third indication information is carried in second information sent by the second device; or, at least one of the first indication information, the second indication information, or the third indication information is sent before the second information.

After the above step 32, after receiving the first information, the second device may determine the target parameter used by the first device to send the first information. Then, using the one or more target parameters, the second device sends third information to the first device, wherein the third information corresponds to the first information; and receives fourth information sent by the first device using the one or more target parameters. Taking the inventory procedure of an RFID system as an example, the third information may be an ACK command, and the fourth information may be an Electronic Product Code (EPC) of the first device, a truncated EPC, or data.

The methods of the embodiments of the present disclosure have been described above from the sides of the first device and the second device respectively. The above-mentioned method of the present disclosure will be described more specifically below by taking an inventory procedure as an example.

The network device and the terminal in the following examples correspond to the second device and the first device above, respectively, and the parameters in these examples are one or more modulation schemes related parameters and/or one or more coding schemes related parameters.

### Example 1:

In this example, the network device sends first indication information, such as a Query command, to start a round of inventory procedure. According to the existing inventory procedure, after the network device sends the Query command or a QueryRep command, if a slot counter of a terminal (or a device such as a tag, hereinafter referred to as a terminal) is 0 or decrements to 0, the terminal will send first uplink information, such as RN16, i.e., a random number generated by the terminal. Since initial values of slot counters loaded by different terminals may be the same, they will simultaneously perform the sending of the first uplink information.

This example provides multiple candidate Miller transmission schemes for the same slot for sending the first uplink information, for example, providing three transmission schemes of M=2, M=4, and M=8. Terminals responding in the same slot may select an M value randomly or according to a certain rule. When different terminals select different M values, since their spectrums do not overlap with each other, when the network device performs reception, terminal data of different M values can be filtered out through a filter and demodulated to obtain the first uplink information sent by different terminals, thereby implementing simultaneous multiplexing transmission of multiple terminals, reducing collision probability, and improving spectrum efficiency. This example includes the following steps.

Step 1: the network device sends first downlink indication information, wherein the first indication information is used to indicate N number of candidate modulation schemes and/or coding schemes related parameters to be used by the terminal in sending the first uplink information.

For example, the first indication information is carried in a Query command for starting a round of inventory or in a Select command for performing tag selection, for example, carrying three transmission modes: Miller modulated subcarriers M=2, 4, 8.

For the Miller modulated subcarrier mode, as shown in FIG. 1, one possible way is that for M=2, 4, 8, the absolute time length occupied by each bit is the same. Therefore, the actual bit rate is the same, which is equivalent to the case where Backscatter-link frequencies (BLF, equivalent to the reciprocal of a transmission time unit, for example, if a transmission time code element chip length is T_{c}, the chip rate is 1/T_{c}, then the bit rate will be further divided by M based on the chip rate) are different. Another way is that the BLF is the same, or the chip rate is the same. In this case, the duration of data bits carried through M=4 will be twice the duration of data bits carried through M=2, that is, the bit rates are different. During the application of this step, the parameters sent by the first indication information may additionally include parameters similar to BLF in addition to the one or more modulation schemes related parameters and/or one or more coding schemes related parameters. At least one of modulation, coding, and BLF, or a combination of at least two thereof, is taken as a candidate parameter, and multiple candidate parameters are provided as a set to be indicated to the terminal. For example, {Miller modulated subcarrier M=2 & BLF=80KHz, Miller modulated subcarrier M=4 & BLF=160KHz, Miller modulated subcarrier M=8 & BLF=320KHz} are indicated as transmission scheme parameters that can be used. Here, the "set" is only for convenience of description and represents that multiple candidate parameters are provided.

Step 2: the terminal determines which one of the N number of candidate modulation schemes and/or coding schemes related parameters to use when sending the first uplink information based on identifier-related information of the terminal or a first value generated by the terminal.

Here, the first uplink information is sent when the terminal receives the first downlink information and certain constraints are satisfied. The first indication information may be sent before the first downlink information or carried in the first downlink information. For example, the first downlink information may be similar to a Query command to start a round of inventory, or similar to a QueryRep command to trigger a timer decrement.

When the terminal needs to perform first uplink information feedback, such as sending RN16, the terminal may determine the target one or more modulation schemes related parameters and/or one or more coding schemes related parameters according to the following optional ways.

Optional way 1: the terminal determines the M value to be used based on its identifier (ID) related information, for example, by performing a modulo operation on N (N is a positive integer, here assuming N=3) using its ID-related information. For example, if the result of the modulo operation is 0, M=2 is used; if the result of the modulo operation is 1, M=4 is used; if the result of the modulo operation is 2, M=8 is used.

Optional way 2: based on data generated by the terminal, for example, performing a modulo operation on the N value using the random number value RN16, and determining which one of M=2, 4, 8 to use according to the modulo result value.

Optional way 3: the terminal generates a random number not greater than N (here N=3), for example, a random integer in the range of 1~3. According to the integer value, M=2 is taken if it is 1, M=4 is taken if it is 2, and M=8 is taken if it is 3.

In this way, when multiple terminals send the first uplink information in the same slot, the effect of transmission multiplexing is achieved by taking different M values. When the network device receives the first uplink information sent by the terminals, it first performs filtering, performs filtering according to the spectrums of M=2, 4, 8 respectively, and performs demodulation respectively to obtain uplink data sent by the terminals.

In this way, the number of multiplexed users can be increased, and the user collision probability can be significantly reduced. According to RFID rules, once two or more terminals select the same slot for RN16 response, the reader cannot demodulate terminal data. However, according to this example, even if three terminals respond in the same slot, as long as their finally selected M values are different, the network device can still demodulate the terminal data, greatly reducing the probability of collision.

### Example 2:

Based on Example 1, in Example 2, the network device further sends second indication information, wherein the second indication information indicates the candidate one or more modulation schemes related parameters and/or one or more coding schemes related parameters corresponding to a set of slots or a set of transmission occasions.
(1) The set of slots or the set of transmission occasions has a correspondence relationship with a terminal type;
(2) or the set of slots or the set of transmission occasions has a correspondence relationship with a channel state of the terminal or intensity of a downlink signal received by the terminal.

In addition, the network device may further send a signal threshold value for the terminal to determine which set of slots or set of transmission occasions it should use.

Here, in a case where the terminal can obtain relatively accurate synchronization with the network device, the timing operation of uplink and downlink transmission can be performed through the definition of slots. In a case where the terminal cannot obtain accurate synchronization with the network device, it can only rely on the network device to continuously send downlink information to trigger uplink transmission. For example, each time a downlink command is sent, it serves as an occasion for uplink response, and then another downlink command is sent, serving as the next occasion for response. In other words, an occasion between two adjacent downlink commands may be referred to as an uplink transmission occasion.

Considering that in the design of Artificial Intelligence & Internet of Things (A-IOT), there is a possibility that different terminals use different transmission occasions for RN16 response. For example:

Terminals with different coverage levels use different slots or transmission occasions for response. A terminal device obtains information such as signal strength of the terminal device by measuring a downlink signal sent by the network device, thereby inferring its own coverage level. By controlling terminals with different coverage levels to respond in different slots or transmission occasions, the network device can obtain channel quality of the terminal, so as to perform subsequent adjustment of transmission schemes and improve transmission efficiency and transmission reliability.

Therefore, in Example 2, the set of slots or the set of transmission occasions may be determined first. For example, all transmission occasions are divided into transmission occasion set 1, transmission occasion set 2, and transmission occasion set 3, which respectively correspond to the response occasions of terminals with channel states 1, 2, and 3.

Then, candidate one or more modulation schemes related parameters and/or one or more coding schemes related parameters that can be applied are indicated for different first transmission occasion sets. For example, M=2, 4 are specified for transmission occasion set 1, M=4, 8 are specified for transmission occasion set 2, and M=2, 4, 8 are specified for transmission occasion set 3. When a terminal satisfies a response condition in its corresponding transmission occasion set, the M value to be used is selected from the candidate one or more modulation schemes related parameters and/or one or more coding schemes related parameters corresponding to the transmission occasion set using the optional way in Example 1 to transmit the first uplink information.

This Example 2 may also group terminals for the purpose of protecting certain specific terminals, and different terminals use different slots or transmission occasions for response. Then, different uplink response occasions or slots can be specified for different types of terminals. In a case where different uplink response occasions or slots are specified for different types of terminals, non-uniform slot distribution may also be allowed for terminals. For example, there are 1024 slots in total, the first 500 slots are for high-priority terminals, and the subsequent slots are for low-priority terminals. If only about 200 terminals need to be inventoried in the first 500 slots, while about 500 terminals need to be inventoried in the subsequent 524 slots, then the terminal collision probability in the previous slots and the subsequent slots is obviously different.

Here, the set of slots or the set of transmission occasions is first determined. For example, all transmission occasions are grouped into transmission occasion set 1, transmission occasion set 2, and transmission occasion set 3, which respectively correspond to the response occasions of terminals of terminal types 1, 2, and 3, or correspond to the response occasions of terminal priorities 1, 2, and 3.

Further, by providing different candidate one or more modulation schemes related parameters and/or one or more coding schemes related parameters for different slots or transmission occasions, for example, M=2, 4 are specified for transmission occasion set 1, M=4, 8 are specified for transmission occasion set 2, and M=2, 4, 8 are specified for transmission occasion set 3. When a terminal satisfies a response condition in its corresponding transmission occasion set, the M value to be used is selected from the candidate one or more modulation schemes related parameters and/or one or more coding schemes related parameters corresponding to the transmission occasion set using the optional way in Example 1 to transmit the first uplink information.

Through the above way, the quantity of candidate M values at certain occasions is agreed upon, and the network device can reduce detection complexity at certain slots or transmission occasion positions without detecting all M values.

In the above Example 1 or Example 2, the terminal uses the same one or more modulation schemes related parameters and/or one or more coding schemes related parameters for sending uplink information after the first uplink information as that for the first uplink information. Here, after receiving the first uplink information, the network device sends second downlink information corresponding to the first uplink information, and then receives second uplink information corresponding to the second downlink information using the same one or more modulation schemes related parameters and/or one or more coding schemes related parameters as that for the first uplink information.

For example, if the terminal sends the first uplink information, such as sending RN16, and selects Miller M=4, then after receiving an ACK message carrying the RN16 sent by the network device, the terminal still uses the same Miller M=4 for transmission when sending uplink data such as EPC.

For the network device, after receiving the first uplink information, it can determine which terminal in the same slot has successfully responded. For example, if one terminal selects M=2 and two terminals select M=4, then the network device can only detect the terminal responding using M=2, and thus can determine that the terminal has successfully responded. Thereafter, the network device sends first downlink information, such as ACK, corresponding to the M=2 of the terminal, and then receives the corresponding second uplink information. At this time, the network device knows that only one terminal is sending the second uplink information and using M=2.

In addition, in the above examples, the terminal may determine multiplexed resources used during the sending of the first uplink information based on a channel state of the terminal or intensity of a downlink signal received by the terminal. At this time, the network device needs to send a signal strength threshold for the terminal to determine resources. For example, in a case where serial interference cancellation is introduced, data of a user with the best channel can be obtained first only when SNRs of terminals superimposed together for transmission differ greatly, and then data of other users can be obtained sequentially after the user data is removed. Therefore, when multiple terminals respond in the same slot, which candidate code-domain resource to select is determined based on the signal threshold value sent by the network. Here, the terminal determines the channel state of the terminal based on a result of measurement performed based on a signal sent by the network device.

In the above examples, the network device may further send information regarding which optional way the tag uses to perform the selection of the modulation/coding scheme(s).

As can be seen from the above examples, the present disclosure can reduce the probability of terminal uplink collision. Of course, in a case where at least two terminals simultaneously select the same M value, collision will still exist. For these colliding terminals, inventory may continue in the next round of inventory.

Various methods of the embodiments of the present disclosure have been introduced above. Apparatuses for implementing the above methods will be further provided below.

Please refer to FIG. 6. An embodiment of the present disclosure further provides a first device, including:
a first receiving module 601, configured to receive first indication information sent by a second device, wherein the first indication information is used to indicate at least one parameter set, each parameter set includes at least one parameter, the at least one parameter is one or more resource(s) related parameters or one or more transmission scheme(s) related parameters, and a quantity of parameters in at least one parameter set is greater than 1; and
a first sending module 602, configured to determine one or more target parameters from the at least one parameter set, and send first information using the one or more target parameters.

Through the above modules, the embodiments of the present disclosure can reduce a collision probability of the first information and improve information transmission efficiency.

Optionally, the first sending module is further configured to, in a case where the first indication information only indicates a first parameter set, determine the one or more target parameters according to a target method, wherein the target method includes at least one of the following:
a first method: determining the one or more target parameters from the first parameter set based on identifier-related information of the first device;
a second method: determining the one or more target parameters from the first parameter set based on target data generated by the first device;
a third method: randomly selecting one or more parameters from the first parameter set as the one or more target parameters; or,
a fourth method: taking one or more parameters in the first parameter set that corresponds to a type of the first device, a channel state range of the first device, or a downlink signal reception quality range of the first device as the one or more target parameters.

Optionally, the first sending module is further configured to, in a case where the first indication information indicates at least two parameter sets: determine, from at least two transmission sets, a target transmission set used for transmitting the first information, wherein the transmission set is a set of transmission occasions or a set of slots; determine, from the at least two parameter sets, a target parameter set corresponding to the target transmission set according to a first correspondence relationship between the at least two parameter sets and the at least two transmission sets; and determine one target parameter from the target parameter set.

Optionally, the determining, from the at least two transmission sets, the target transmission set used for transmitting the first information by the first sending module includes at least one of the following:
taking a transmission set among the at least two transmission sets that corresponds to the type of the first device as the target transmission set;
taking a transmission set among the at least two transmission sets that corresponds to a priority of the first device as the target transmission set;
taking a transmission set among the at least two transmission sets that corresponds to the channel state range of the first device as the target transmission set; or,
taking a transmission set among the at least two transmission sets that corresponds to the downlink signal reception quality range of the first device as the target transmission set.

The first device further includes:
an obtaining module, configured to obtain the first correspondence relationship between the at least two parameter sets and the at least two transmission sets, wherein the first correspondence relationship is obtained from the first indication information or from second indication information sent by the second device.

Optionally, the determining the one target parameter from the target parameter set by the first sending module includes:
determining the one or more target parameters according to a target method, wherein the target method includes at least one of the following:
a first method: determining the one or more target parameters from the target parameter set based on identifier-related information of the first device;
a second method: determining the one or more target parameters from the target parameter set based on target data generated by the first device;
a third method: randomly selecting one or more parameters from the target parameter set as the one or more target parameters; or,
a fourth method: taking one or more parameters in the target parameter set that corresponds to the type of the first device, the channel state range of the first device, or the downlink signal reception quality range of the first device as the one or more target parameters.

Optionally, in the first method, a first value is determined based on the identifier-related information of the first device, and one or more parameters corresponding to the first value are taken as the one or more target parameters, wherein a second correspondence relationship exists between the first value and one or more parameters in the parameter set;
in the second method, a second value is determined based on the target data generated by the first device, and one or more parameters corresponding to the second value are taken as the one or more target parameters, wherein a third correspondence relationship exists between the second value and the one or more parameters in the parameter set; and
in the fourth method, a fourth correspondence relationship exists between the type of the first device, the channel state range of the first device, or the downlink signal reception quality range of the first device and the one or more parameters in the parameter set.

Optionally, the first device further includes:
a second receiving module, configured to receive at least one threshold value sent by the second device, wherein the at least one threshold value is used to determine the channel state range or the downlink signal reception quality range.

Optionally, the first device further includes:
a third receiving module, configured to receive third indication information sent by the second device, wherein the third indication information is used for determining the target method.

Optionally, at least one of the first indication information, the second indication information, or the third indication information is carried in second information sent by the second device; or, at least one of the first indication information, the second indication information, or the third indication information is sent by the second device before sending the second information.

Optionally, the first device further includes:

A fourth receiving module, configured to receive third information sent by the second device based on the one or more target parameters, wherein the third information corresponds to the first information; and
a second sending module, configured to send fourth information based on the one or more target parameters.

Optionally, the one or more resource(s) related parameters include at least one of the following: one or more time-domain resources related parameters, one or more frequency-domain resources related parameters, or one or more code-domain resources related parameters.

Optionally, the one or more transmission scheme(s) related parameters include one or more modulation schemes related parameters and/or one or more coding schemes related parameters.

It should be noted that the device in this embodiment is a device corresponding to the above-mentioned method applied to the first device side. The implementations in the above embodiments are applicable to the embodiment of this device, and the same technical effect can be achieved. The above-mentioned device provided in the embodiments of the present disclosure can implement all method steps implemented in the above method embodiments and can achieve the same technical effect. The parts and beneficial effects in this embodiment that are the same as those in the method embodiments are not specifically described here again.

Please refer to FIG. 7, an embodiment of the present disclosure further provides a second device, including:
a first sending module 701, configured to send first indication information, wherein the first indication information is used to indicate at least one parameter set, each parameter set includes at least one parameter, the at least one parameter is one or more resource(s) related parameters or one or more transmission scheme(s) related parameters, and a quantity of parameters in at least one parameter set is greater than 1; and
a first receiving module 702, configured to receive first information sent by a first device using one or more target parameters, wherein the one or more target parameters is one parameter in the at least one parameter set.

Through the above modules, the embodiments of the present disclosure improve information transmission efficiency.

Optionally, in a case where the first indication information only indicates a first parameter set, a quantity of parameters in the first parameter set is greater than 1.

Optionally, in a case where the first indication information indicates at least two parameter sets, the second device further includes:
a second sending module, configured to send a first correspondence relationship between the at least two parameter sets and at least two transmission sets, wherein the first correspondence relationship is carried in the first indication information or in second indication information sent by the second device, and the transmission set is a set of transmission occasions or a set of slots.

Optionally, the transmission set corresponds to a type of the first device; or, the transmission set corresponds to a priority of the first device; or, the transmission set corresponds to a channel state range of the first device; or, the transmission set corresponds to a downlink signal reception quality range of the first device.

Optionally, the second device further includes:
a third sending module, configured to send at least one threshold value, wherein the at least one threshold value is used to determine the channel state range or the downlink signal reception quality range.

Optionally, the second device further includes:
a fourth sending module, configured to send third indication information, wherein the third indication information is used to indicate a target method for determining the one or more target parameters from the parameter set, the target method including at least one of the following:
a first method: determining the one or more target parameters from the parameter set based on identifier-related information of the first device;
a second method: determining the one or more target parameters from the parameter set based on target data generated by the first device;
a third method: randomly selecting one or more parameters from the parameter set as the one or more target parameters; or,
a fourth method: taking one or more parameters in the parameter set that corresponds to the type of the first device, the channel state range of the first device, or the downlink signal reception quality range of the first device as the one or more target parameters.

Optionally, at least one of the first indication information, the second indication information, or the third indication information is carried in second information sent by the second device; or, at least one of the first indication information, the second indication information, or the third indication information is sent before the second information.

Optionally, the second device further includes:
a fifth sending module, configured to, in a case where the first information sent by the first device using the one or more target parameters is received, send third information to the first device using the one or more target parameters, wherein the third information corresponds to the first information; and
a second receiving module, configured to receive fourth information sent by the first device using the one or more target parameters.

Optionally, the one or more resource(s) related parameters include at least one of the following: one or more time-domain resources related parameters, one or more frequency-domain resources related parameters, or one or more code-domain resources related parameters.

Optionally, different frequency-domain resources within the one or more frequency-domain resources are realized by different modulation schemes and/or coding schemes.

It should be noted that the device in this embodiment is a device corresponding to the above-mentioned method applied to the second device side. The implementations in the above embodiments are applicable to the embodiment of this device, and the same technical effect can be achieved. The above-mentioned device provided in the embodiments of the present disclosure can implement all method steps implemented in the above method embodiments and can achieve the same technical effect. The parts and beneficial effects in this embodiment that are the same as those in the method embodiments are not specifically described here again.

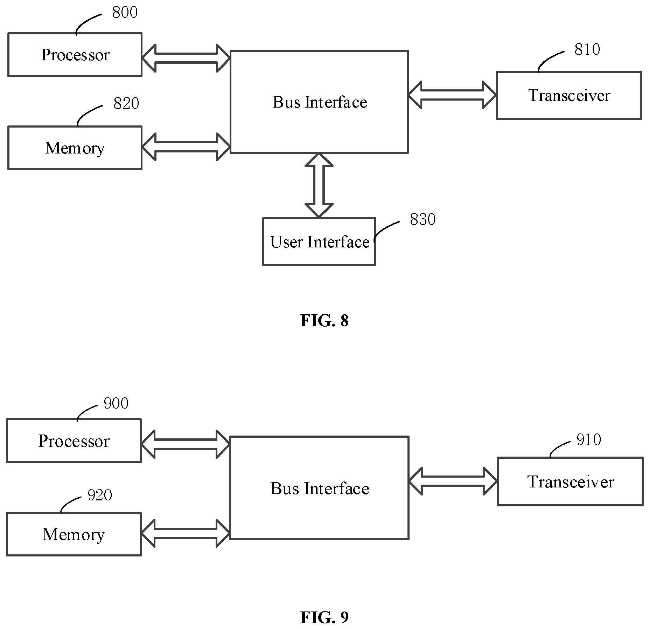

A terminal according to another embodiment of the present disclosure, as shown in FIG. 8, includes a transceiver 810, a processor 800, a memory 820, and a program or instruction stored on the memory 820 and executable on the processor 800. When the processor 800 executes the program or instruction, each process of the above-mentioned embodiment of the transmission method on the first device side is implemented, and the same technical effect can be achieved. To avoid repetition, details are not repeated here.

The transceiver 810 is configured to receive and send data under the control of the processor 800.

In FIG. 8, the bus architecture may include any number of interconnected buses and bridges, specifically various circuits of one or more processors represented by the processor 800 and the memory represented by the memory 820 are linked together. The bus architecture can also link together various other circuits such as peripheral devices, voltage regulators, and power management circuits, which are well known in the art, and therefore will not be further described herein. The bus interface provides an interface. The transceiver 810 may be a plurality of elements, i.e., including a transmitter and a receiver, providing a unit for communicating with various other devices on a transmission medium. For different user equipment, the user interface 830 may also be an interface capable of externally or internally connecting required devices, and the connected devices include but are not limited to a keypad, a display, a speaker, a microphone, a joystick, etc.

The processor 800 is responsible for managing the bus architecture and general processing, and the memory 820 can store data used by the processor 800 when performing operations.

A network node according to another embodiment of the present disclosure, as shown in FIG. 9, includes a transceiver 910, a processor 900, a memory 920, and a program or instruction stored on the memory 920 and executable on the processor 900. When the processor 900 executes the program or instruction, each process of the above-mentioned embodiment of the transmission method on the second device side is implemented, and the same technical effect can be achieved. To avoid repetition, details are not repeated here.

The transceiver 910 is configured to receive and send data under the control of the processor 900.

In FIG. 9, the bus architecture may include any number of interconnected buses and bridges, specifically various circuits of one or more processors represented by the processor 900 and the memory represented by the memory 920 are linked together. The bus architecture can also link together various other circuits such as peripheral devices, voltage regulators, and power management circuits, which are well known in the art, and therefore will not be further described herein. The bus interface provides an interface. The transceiver 910 may be a plurality of elements, i.e., including a transmitter and a receiver, providing a unit for communicating with various other devices on a transmission medium. The processor 900 is responsible for managing the bus architecture and general processing, and the memory 920 can store data used by the processor 900 when performing operations.

An embodiment of the present disclosure further provides a computer-readable storage medium, wherein a computer program is stored on the computer-readable storage medium, and when the computer program is executed by a processor, each process of the above-mentioned transmission method embodiments is implemented, and the same technical effect can be achieved. To avoid repetition, details are not repeated here. The computer-readable storage medium is, for example, a Read-Only Memory (ROM), a Random Access Memory (RAM), a magnetic disk, or an optical disk.

An embodiment of the present disclosure further provides a computer program product, including computer instructions. When the computer instructions are executed by a processor, each process of the above-mentioned transmission method embodiments is implemented, and the same technical effect can be achieved. To avoid repetition, details are not repeated here.

It should be noted that, in this document, the terms "comprise", "include", or any other variant thereof are intended to cover a non-exclusive inclusion, such that a process, method, article, or device including a series of elements includes not only those elements, but also other elements not clearly listed, or elements inherent to such a process, method, article, or device. Without further limitation, an element defined by the phrase "comprising a..." does not exclude the existence of additional identical elements in the process, method, article, or device including the element.

From the description of the above embodiments, those skilled in the art can clearly understand that the methods in the above embodiments can be implemented by means of software plus a necessary universal hardware platform, and of course, can also be implemented by hardware, but in many cases, the former is a better implementation. Based on such understanding, the technical solutions of the present disclosure essentially or the part that contributes to the existing technology can be embodied in the form of a software product. The computer software product is stored in a storage medium (such as ROM/RAM, a magnetic disk, or an optical disk), including several instructions to enable a terminal (which may be a mobile phone, a computer, a server, an air conditioner, or a network device, etc.) to perform the methods described in various embodiments of the present disclosure.

The embodiments of the present disclosure have been described above with reference to the accompanying drawings, but the present disclosure is not limited to the specific implementations described above. The specific implementations described above are only illustrative and not restrictive. Under the spirit of the present disclosure, those of ordinary skill in the art can also make many forms without departing from the purpose of the present disclosure and the scope protected by the claims, all of which fall within the protection of the present disclosure.

## Claims

1. A transmission method, applied to a first device, the method comprising:
receiving first indication information sent by a second device, wherein the first indication information is used to indicate at least one parameter set, each parameter set comprises at least one parameter, the at least one parameter is one or more resource(s) related parameters or one or more transmission scheme(s) related parameters, and a quantity of parameters in at least one parameter set is greater than 1; and
determining one or more target parameters from the at least one parameter set, and sending first information using the one or more target parameters.

2. The method according to claim 1, wherein in a case where the first indication information only indicates a first parameter set, the determining the one or more target parameters from the at least one parameter set comprises:
determining the one or more target parameters according to a target method, wherein the target method comprises at least one of the following:
a first method: determining the one or more target parameters from the first parameter set based on identifier-related information of the first device;
a second method: determining the one or more target parameters from the first parameter set based on target data generated by the first device;
a third method: randomly selecting one or more parameters from the first parameter set as the one or more target parameters; or,
a fourth method: taking one or more parameters in the first parameter set that corresponds to a type of the first device, a channel state range of the first device, or a downlink signal reception quality range of the first device as the one or more target parameters.

3. The method according to claim 1, wherein in a case where the first indication information indicates at least two parameter sets, the determining the one or more target parameters from the at least one parameter set comprises:
determining, from at least two transmission sets, a target transmission set used for transmitting the first information, wherein the transmission set is a set of transmission occasions or a set of slots;
determining, from the at least two parameter sets, a target parameter set corresponding to the target transmission set according to a first correspondence relationship between the at least two parameter sets and the at least two transmission sets; and
determining one target parameter from the target parameter set.

4. The method according to claim 3, wherein the determining, from the at least two transmission sets, the target transmission set used for transmitting the first information comprises at least one of the following:
taking a transmission set among the at least two transmission sets that corresponds to the type of the first device as the target transmission set;
taking a transmission set among the at least two transmission sets that corresponds to a priority of the first device as the target transmission set;
taking a transmission set among the at least two transmission sets that corresponds to the channel state range of the first device as the target transmission set; or,
taking a transmission set among the at least two transmission sets that corresponds to the downlink signal reception quality range of the first device as the target transmission set.

5. The method according to claim 4, further comprising:
obtaining the first correspondence relationship between the at least two parameter sets and the at least two transmission sets, wherein the first correspondence relationship is obtained from the first indication information or from second indication information sent by the second device.

6. The method according to claim 3, wherein the determining the one target parameter from the target parameter set comprises:
determining the one or more target parameters according to a target method, wherein the target method comprises at least one of the following:
a first method: determining the one or more target parameters from the target parameter set based on identifier-related information of the first device;
a second method: determining the one or more target parameters from the target parameter set based on target data generated by the first device;
a third method: randomly selecting one or more parameters from the target parameter set as the one or more target parameters; or,
a fourth method: taking one or more parameters in the target parameter set that corresponds to the type of the first device, the channel state range of the first device, or the downlink signal reception quality range of the first device as the one or more target parameters.

7. The method according to claim 2 or 6, wherein:
in the first method, a first value is determined based on the identifier-related information of the first device, and one or more parameters corresponding to the first value are taken as the one or more target parameters, wherein a second correspondence relationship exists between the first value and one or more parameters in the parameter set;
in the second method, a second value is determined based on the target data generated by the first device, and one or more parameters corresponding to the second value are taken as the one or more target parameters, wherein a third correspondence relationship exists between the second value and the one or more parameters in the parameter set; and
in the fourth method, a fourth correspondence relationship exists between the type of the first device, the channel state range of the first device, or the downlink signal reception quality range of the first device and the one or more parameters in the parameter set.

8. The method according to claim 7, further comprising:
receiving at least one threshold value sent by the second device, wherein the at least one threshold value is used to determine the channel state range or the downlink signal reception quality range.

9. The method according to claim 2 or 6, further comprising:
receiving third indication information sent by the second device, wherein the third indication information is used for determining the target method.

10. The method according to claim 9, wherein:
at least one of the first indication information, the second indication information, or the third indication information is carried in second information sent by the second device; or,
at least one of the first indication information, the second indication information, or the third indication information is sent by the second device before sending the second information.

11. The method according to claim 10, further comprising:
receiving third information sent by the second device based on the one or more target parameters, wherein the third information corresponds to the first information; and
sending fourth information based on the one or more target parameters.

12. The method according to claim 1, wherein the one or more resource(s) related parameters comprise at least one of the following: one or more time-domain resources related parameters, one or more frequency-domain resources related parameters, or one or more code-domain resources related parameters.

13. The method according to claim 1, wherein the one or more transmission scheme(s) related parameters comprise one or more modulation schemes related parameters and/or one or more coding schemes related parameters.

14. The method according to claim 13, wherein the one or more modulation schemes related parameters have a correspondence relationship with at least one of the following:
a ratio of a bit rate to a chip rate; or,
a ratio of a bit duration to a chip duration.

15. A transmission method, applied to a second device, the method comprising:
sending first indication information, wherein the first indication information is used to indicate at least one parameter set, each parameter set comprises at least one parameter, the at least one parameter is one or more resource(s) related parameters or one or more transmission scheme(s) related parameters, and a quantity of parameters in at least one parameter set is greater than 1; and
receiving first information sent by a first device using one or more target parameters, wherein the one or more target parameters is one parameter in the at least one parameter set.

16. The method according to claim 15, wherein in a case where the first indication information only indicates a first parameter set, a quantity of parameters in the first parameter set is greater than 1.

17. The method according to claim 15, wherein in a case where the first indication information indicates at least two parameter sets, the method further comprises:
sending a first correspondence relationship between the at least two parameter sets and at least two transmission sets, wherein the first correspondence relationship is carried in the first indication information or in second indication information sent by the second device, and the transmission set is a set of transmission occasions or a set of slots.

18. The method according to claim 17, wherein:
the transmission set corresponds to a type of the first device; or,
the transmission set corresponds to a priority of the first device; or,
the transmission set corresponds to a channel state range of the first device; or,
the transmission set corresponds to a downlink signal reception quality range of the first device.

19. The method according to claim 18, further comprising:
sending at least one threshold value, wherein the at least one threshold value is used to determine the channel state range or the downlink signal reception quality range.

20. The method according to claim 18, further comprising:
sending third indication information, wherein the third indication information is used to indicate a target method for determining the one or more target parameters from the parameter set, the target method comprising at least one of the following:
a first method: determining the one or more target parameters from the parameter set based on identifier-related information of the first device;
a second method: determining the one or more target parameters from the parameter set based on target data generated by the first device;
a third method: randomly selecting one or more parameters from the parameter set as the one or more target parameters; or,
a fourth method: taking one or more parameters in the parameter set that corresponds to the type of the first device, the channel state range of the first device, or the downlink signal reception quality range of the first device as the one or more target parameters.

21. The method according to claim 20, wherein:
at least one of the first indication information, the second indication information, or the third indication information is carried in second information sent by the second device; or,
at least one of the first indication information, the second indication information, or the third indication information is sent before the second information.

22. The method according to claim 15, wherein in a case where the first information sent by the first device using the one or more target parameters is received, the method further comprises:
sending third information to the first device using the one or more target parameters, wherein the third information corresponds to the first information; and
receiving fourth information sent by the first device using the one or more target parameters.

23. The method according to claim 15, wherein the one or more resource(s) related parameters comprise at least one of the following: one or more time-domain resources related parameters, one or more frequency-domain resources related parameters, or one or more code-domain resources related parameters.

24. The method according to claim 23, wherein different frequency-domain resources within the one or more frequency-domain resources are realized by different modulation schemes and/or coding schemes.

25. The method according to claim 15, wherein the one or more transmission scheme(s) related parameters comprise one or more modulation schemes related parameters and/or one or more coding schemes related parameters.

26. The method according to claim 25, wherein the one or more modulation schemes related parameters have a correspondence relationship with at least one of the following:
a ratio of a bit rate to a chip rate; or,
a ratio of a bit duration to a chip duration.

27. A first device, comprising:
a first receiving module, configured to receive first indication information sent by a second device, wherein the first indication information is used to indicate at least one parameter set, each parameter set comprises at least one parameter, the at least one parameter is one or more resource(s) related parameters or one or more transmission scheme(s) related parameters, and a quantity of parameters in at least one parameter set is greater than 1; and
a first sending module, configured to determine one or more target parameters from the at least one parameter set, and send first information using the one or more target parameters.

28. A second device, comprising:
a first sending module, configured to send first indication information, wherein the first indication information is used to indicate at least one parameter set, each parameter set comprises at least one parameter, the at least one parameter is one or more resource(s) related parameters or one or more transmission scheme(s) related parameters, and a quantity of parameters in at least one parameter set is greater than 1; and
a first receiving module, configured to receive first information sent by a first device using one or more target parameters, wherein the one or more target parameters is one parameter in the at least one parameter set.

29. A first device, comprising: a transceiver, a processor, a memory, and a program or instruction stored on the memory and executable on the processor, wherein when the program or instruction is executed by the processor, the steps of the method according to any one of claims 1 to 14 are implemented.

30. A second device, comprising: a transceiver, a processor, a memory, and a program or instruction stored on the memory and executable on the processor, wherein when the program or instruction is executed by the processor, the steps of the method according to any one of claims 15 to 26 are implemented.

31. A computer-readable storage medium, wherein a computer program is stored on the computer-readable storage medium, and when the computer program is executed by a processor, the steps of the method according to any one of claims 1 to 14 are implemented, or the steps of the method according to any one of claims 15 to 26 are implemented.

32. A computer program product, comprising computer instructions, wherein when the computer instructions are executed by a processor, the steps of the method according to any one of claims 1 to 14 are implemented, or the steps of the method according to any one of claims 15 to 26 are implemented.
